# EUROPÄISCHE PATENTANMELDUNG

(11) **EP 0 875 371 A1**
(43) Veröffentlichungstag der Anmeldung: **04.11.1998**
(21) Anmeldenummer: 97107034.7
(22) Anmeldetag: 28.04.1997
(51) Int. Cl.: B32B 19/04, E04B 1/94, C09K 21/00

(54) **Feuerfester Plattenverbund, ein Verfahren zu dessen Herstellung sowie dessen Verwendung**

(71) Anmelder: Mineralka d.o.o., 1380 Cerknica (SI)
(72) Erfinder: Silc, Milan, Dipl.-Ing., 1236 Trzin (SI); Marolt, Iva, 1380 Cerknica (SI)
(74) Vertreter: Dungler, Karin

(57) **Zusammenfassung**

Es wird ein feuerfester Plattenverbund (1), insbesondere einer bestehend aus drei Schichten angegeben, welcher eine Mittelschicht (3) aus beleimten, anorganischen Blähmaterialien in Kombination mit anorganischen, faserhältigen Füllstoffen enthält. Beidseitig an die Mittelschicht (3) sind Außenschichten in Form von Platten (2,2') angeordnet. Diese bestehen aus mindestens zwei Lagen beleimter Blähmaterialien, zwischen welchen eine mechanisch beanspruchbare, durchgehend flächige Verstärkungsschicht (5) vorgesehen ist.

Der feuerfeste Plattenverbund kann für den Innenbereich im Hoch- und Schiffbau verwendet werden.

## Beschreibung

Die Erfindung betrifft einen feuerfesten Plattenverbund bestehend im wesentlichen aus anorganischen Blähmaterialien wie geblähtem Vermiculit, welche mit Bindemitteln beleimt und anschließend verpreßt sind, ein Verfahren zu dessen Herstellung sowie dessen Verwendung.

Aus der EP-A1-43144 ist ein Verfahren zur Herstellung von unbrennbaren, feuerfesten Plattenverbunden aus drei Schichten, die aus anorganischen Blähmaterialien wie Vermiculit und Perlit bestehen, vorbekannt. In diesem Plattenverbund bildet jedes Material für sich selbst eine Plattenschicht. Zur Herstellung der einzelnen Plattenschichten wird ein Granulat aus den genannten anorganischen Blähmaterialien mit einem Bindemittel versetzt, welches beispielsweise eines auf Basis von duroplastischen Harzen in Kombination mit Phosphaten sein kann. Das derart behandelte Granulat wird anschließend zu Platten verpreßt.

Bedingt durch den ausschließlichen Einsatz anorganischer Materialien weisen die endgefertigten, feuerfesten Plattenverbunde ein hohes Gewicht sowie relativ hohe Steifigkeitswerte auf. Ihre Weiterverarbeitung, beispielsweise im Rahmen von üblichen Formgebungsprozessen ist daher nur schwer bis gar nicht möglich.

Aufgabe der vorliegenden Erfindung ist es daher, einen feuerfesten Plattenverbund anzugeben, welcher im Rahmen üblicher Formgebungsprozesse weiterverarbeitbar ist, die gewünschten mechanischen Schallschutz und Wasserbeständigkeits-Charakteristiken bei relativ niedrigem Gewicht ermöglicht und gleichzeitig die internationalen Brandschutzbestimmungen erfüllt.

Erfindungsgemäß wird daher ein feuerfester Plattenverbund, bestehend im wesentlichen aus anorganischen Blähmaterialien unterschiedlicher Korngröße wie geblähtem Vermiculit, welche mit Bindemitteln beleimt und anschließend verpreßt werden, vorgeschlagen, wobei zumindestens zwei Lagen derartiger Blähmaterialien vorgesehen sind, zwischen welchen eine flächige Verstärkungsschicht liegt.

Ein Vorteil dieses feuerfesten Plattenverbundes besteht darin, daß abwechselnd eine Lage beleimter Blähmaterialien und eine Verstärkungsschicht vorgesehen sind, sodaß insgesamt drei Lagen an beleimtem Blähmaterial und zwei Lagen Verstärkungsschicht vorliegen.

Ferner wird erfindungsgemäß ein dreischichtiger feuerfester Plattenverbund angegeben, welcher dadurch gekennzeichnet ist, daß die Mittelschicht eine Platte aus beleimten Blähmaterialien unterschiedlicher Korngröße in Kombination mit anorganischen, faserhältigen Füllstoffen ist, und daß an diese Mittelschicht beidseitig Außenschichten in Form von Platten, bestehend aus zumindestens zwei Lagen beleimter Blähmaterialien, zwischen welchen eine mechanisch beanspruchbare, durchgehend flächige Verstärkungsschicht vorliegt, vorgesehen sind.

Ferner weist der erfindungsgemäße feuerfeste Plattenverbund den Vorteil auf, daß die Verstärkungsschicht eine mechanisch verformbare Metallschicht, ein Gewebe, Gelege oder Vlies aus organischen und/oder anorganischen Fasern ist.

Erfindungsgemäß wird der feuerfeste Plattenverbund für den Innenbereich im Hoch- und Schiffbarn verwendet.

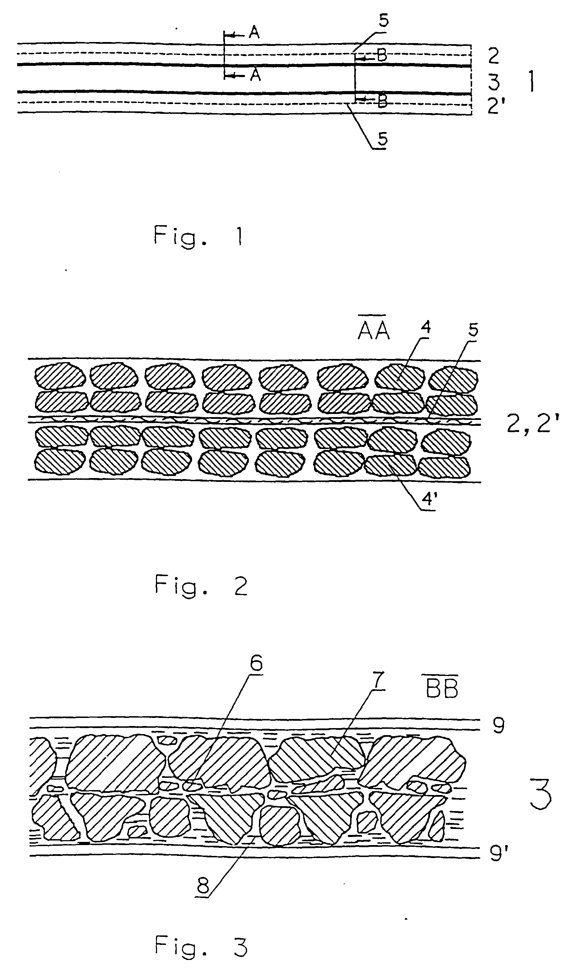

Die Erfindung wird nunmehr anhand der Figuren 1 - 3 näher erläutert:

In Fig. 1 ist ein dreischichtiger, feuerfester Plattenverbund 1 dargestellt. Dieser weist die Kernschicht 3, welche in ihrer Zusammensetzung im wesentlichen der Platte aus Anspruch 4 entspricht, im Schnitt AA auf. Die Kernschicht 3 weist beidseitig die Außenschichten 2, 2' auf, welche im wesentlichen einer Platte aus Anspruch 1 im Schnitt BB entspricht. Die Außenschichten 2, 2' weisen jeweils die Verstärkungsschicht 5 auf.

Figur 2 zeigt vergrößert die Außenschichten 2, 2' im Schnitt AA. Diese bestehen aus den Lagen 4, 4', bestehend aus beleimtem, expandiertem (geblähtem) Vermiculit. Zwischen den Schichten 4 und 4' ist die Verstärkungsschicht 5 vorgesehen.

In Fig. 3 ist die Kernschicht 3 vergrößert im Schnitt BB dargestellt. Darin sind mit den Bezugszeichen 6 die Vermiculitteilchen mit geringeren Korngröße dargestellt, während mit Bezugszeichen 7 die Vermiculitteilchen mit größerer Korngröße wiedergegeben sind. Zwischen den genannten Vermiculitteilchen sind die anorganischen, faserhältigen Füllstoffe bzw. Perlit 8 vorgesehen.

Die Erfindung wird nunmehr anhand eines Beispiels näher erläutert.

Die erfindungsgemäße Dreischichtplatte 1 wird beispielsweise derart hergestellt, daß Vermiculit unterschiedlicher Herkunft sowie unterschiedlicher Korngröße gemäß Bezugszeichen 4, 5 und 6 einem Ofen zugeführt wird. Die Temperatur der Heißbearbeitung beträgt 800 bis 850 Grad Celsius, je nachdem um welchen Vermiculittyp es sich handelt und welche Korngröße die Vermiculitteilchen haben. Die Volumenerhöhung der Vermiculitteilchen erfolgt auf einen etwa acht- bis zehnfachen Wert der ursprünglichen Größe. Bevor die Vermiculitteilchen den Mischanlagen zugeführt werden, werden Verunreinigungen abgetrennt.

In den Mischanlagen werden die Vermiculitteilchen mit Bindemitteln beleimt. Als Bindemittel werden beispielsweise Harnstoff-Formaldehydharze, Silikate (Wasserglas) und Phosphate sowie Mischungen daraus eingesetzt.

Die Bindemittel werden in Lösung eingesetzt; der Bindemittelanteil liegt in einem Bereich von 40 bis 70. Dadurch liegt der Bindemittelanteil in den Außenschichten 2, 2' in einem Bereich von 15 bis 30% und in der Kernschicht 3 in einem Bereich von 15 bis 30%.

Nach dem Beleimen beträgt der Bindemittelanteil in der Außenschicht 2, 2' etwa 20 % .

Der Anteil an Bindemittel in der Kernschicht beträgt ebenso etwa 20 %.

Die Herstellung der Außenschichten 2, 2' wird beispielsweise wie folgt derchgeführt:

Es wird ein Schüttkuchen der beleimten Vermiculitteilchen 4 auf ein Förderband gestreut und auf diese Schüttung per Hand die Verstärkungsschicht 5 aufgebracht. Diese Verstärkungsschicht 5 kann beispielsweise eine Matte oder ein Netz aus Carbon-, Glas- bzw. Metallfasern verschiedener Stärke und Netzgewebe sein.

Dieser Schüttkuchen wird anschließend einer diskontinuierlich arbeitenden Presse zugeführt und bei einer Temperatur von 160° Celsius und einem Preßdruck von 150 bis 200 N/cm² verpreßt. Es wird ein Halbfabrikat mit dem Aufbau gemäß Fig. 2 erzeugt. Dieses kann einerseits als Endprodukt eingesetzt werden oder es wird für die Herstellung des Plattenverbundes beispielsweise gemäß Fig. 1 weiterverwendet.

Für die Herstellung der Kernschicht 3 werden beleimte Vermiculitteilchen 6, 7 mit unterschiedlicher Kongröße mit anorganischen, faserhältigen Füllstoffen in einem Mischer gemischt. Die Korngröße der kleineren Vermiculitteilchen 6 liegt in einem Bereich von 0,350 bis 3 mm. Die Kongröße der größeren Vermiculittelchen liegt in einem Bereich von 1 bis 2,5 mm. Als anorganische faserhältige Füllstoffe 8 können beispielsweise Gesteinswolle bzw. Perlit zugemengt werden. Diese dienen in der endgefertigten Platte als Schall-, Kälte- und Wärmedämmstoff. Zur weiteren Erhöhung der Schallisolierung kann zu beiden Seiten der Kernschicht 3 eine Metallfolie 9, 9' vorgesehen werden, deren Dicke in einem Bereich von 0,075 mm bis 0,15 mm liegt.

Aus dieser Mischung wird ebenso ein Schuttkuchen hergestellt, welcher in eine diskontinuierliche Presse übergeführt wird, in der er bei einer Temperatur von 130° Celsius und einem Preßdruck von 150 bis 200 N/cm² zu einem Halbfabrikat verarbeitet wird.

Dieses kann nun für folgende Verwendungszwecke eingesetzt werden:
- als Endprodukt, beispielsweise als Brandschutzplatte bzw.
- als Halbfabrikat in einem Plattenverbund gemäß Fig.1.

Der erfindungsgemäße Plattenverbund 1 wird nunmehr aus den Halbfabrikaten 2, 2' für die Ausbildung der Außenschichten und aus dem Halbfabrikat 3 für die Ausbildung der Kernschicht hergestellt.

Dabei wird ein Preßstapel derart gebildet, daß die Außenschichten 2, 2' die Kernschicht 3 beidseitig umgeben. Dieser Preßstapel wird in einer Presse nach dem Kaltverfahren verpreßt.

Zum Zusammenkleben wird ein schwer entflammbarer Polyurethankleber verwendet.

Die verbesserten Produkteingenschaften des erfindungsgemäßen Plattenverbundes 1 werden nun mit einem an sich bekannten Dreischichtplattenverbund mit der Bezeichnung NEGOR®, welcher ausschließlich aus anorganischen Materialien besteht, verglichen.

Die Ergebnisse sind folgender Tabelle zu entnehmen:

| | NEGOR | PLATTE 1 |
|---|---|---|
| Zahl der Schichten | 3 | 3 |
| % der Bindemittel in Außenschicht | 40 | 22 |
| % der Bindemittel in Innenschicht | 23 | 20 |
| Verstärkungen | / | 4 |
| Stärke mm | 19 | 19 |
| Raumgewicht kg/mⁿ 10% | 840 +/- 10% | 580 +/- |
| Biegebruchfestigkeit MPa | 4-5 | 10-11 |
| Unbrennbarkeit | JA | JA |
| Schalldämmung dB | 27 | 32 |
| Wasserabstoßend | NEIN | JA |

Aus der Tabelle ist zu ersehen, daß der Bindemittelgehalt des erfindungsgemäßen Plattenverbundes wesentlich geringer ist als der der vorbekannten, aus reinen anorganischen Blähmaterialien bestehenden Platte mit der Bezeichnung NEGOR®. Dennoch können überraschenderweise die mechanischen Eigenschaften beibehalten werden, und zwar aufgrund der Verstärkungsschicht 5. Durch die Maßnahme dieser Verstärkungsschicht ist ferner das Gewicht des Plattenverbundes niedriger als das der NEGOR®-Platte, was zu konstruktionstechnischen Vorteilen führt.

Ferner ist der Wert betreffend Biegebruchfestigkeit höher, sodaß sich der erfindungsgemäße Plattenverbund 1 leichter als die NEGOR®-Platte verformen läßt.

Aufgrund dieser verbesserten technischen Parameter kann der erfindungsgemäße Plattenverbund in leicht handbarer Weise für den Innenausbau von Schiffen und Gebäuden eingesetzt werden, wobei ebenso die internationalen Normen hinsichtlich Brandschutz erfüllt sind.

## Patentansprüche

1. Feuerfester Plattenverbund, bestehend im wesentlichen aus anorganischen Blähmaterialien unterschiedlicher Korngröße wie geblähtem Vermiculit, welche mit Bindemitteln beleimt und anschließend verpreßt sind, wobei zumindestens zwei Lagen derartiger Blähmaterialien vorgesehen sind, zwischen welchen eine flächige Verstärkungsschicht liegt.

2. Feuerfester Plattenverbund nach Anspruch 1, dadurch gekennzeichnet, daß abwechselnd eine Lage beleimter Blähmaterialien und eine Verstärkungsschicht vorgesehen sind, sodaß insgesamt drei Lagen an beleimtem Blähmaterial und zwei Lagen Verstärkungsschicht vorliegen.

3. Dreischichtiger, feuerfester Plattenverbund, dadurch gekennzeichnet, daß die Mittelschicht eine Platte aus beleimten Blähmaterialien unterschiedlicher Korngröße in Kombination mit anorganischen, faserhältigen Füllstoffen ist, und daß an diese Mittelschicht beidseitig Außenschichten in Form von Platten, bestehend aus zumindestens zwei Lagen beleimter Blähmaterialien, zwischen welchen eine mechanisch beanspruchbare, durchgehend flächige Verstärkungsschicht vorliegt, vorgesehen sind.

4. Feuerfester Plattenverbund nach einem der Ansprüche 1 bis 3, dadurch gekennzeichnet, daß die Verstärkungsschicht eine mechanisch verformbare Metallschicht ist.

5. Feuerfester Plattenverbund nach einem der Ansprüche 1 - 3, dadurch gekennzeichnet, daß die Verstärkungsschicht ein Gewebe, Gelege oder Vlies aus organischen und/oder anorganischen Fasern ist.

6. Verwendung eines feuerfesten Plattenverbundes nach einem der Ansprüche 1 - 5 für den Innenbereich im Hoch- und Schiffbau.
